# EUROPÄISCHE PATENTSCHRIFT

(11) **EP 2 054 648 B1**
(45) Veröffentlichungstag und Bekanntmachung des Hinweises auf die Patenterteilung: **06.04.2016**
(21) Anmeldenummer: 07801224.2
(22) Anmeldetag: 10.08.2007
(51) Int. Cl.: F16J 3/04, F16C 11/06

(54) **DICHTUNGS- ODER FALTENBALG**
SEALING OR CORRUGATED BELLOWS
MANCHON D'ÉTANCHÉITÉ OU SOUFFLET

(30) Priorität: 25.08.2006 DE 102006039861
(43) Veröffentlichungstag der Anmeldung: 06.05.2009
(73) Patentinhaber: Carl Freudenberg KG, 69469 Weinheim (DE)
(72) Erfinder: ABELS, Olaf, 49401 Damme (DE); BLANKE, Arnold, 49401 Damme (DE); DIEKHOFF, Jens, 49448 Lemförde (DE); HEITMANN, Hermann, 32351 Stemwede (DE); HOLTHEIDE, Josef, 49434 Neuenkirchen-Vörden (DE); IDIES, Nedal, 12105 Berlin (DE)
(86) Internationale Anmeldenummer: PCT/DE2007/001421
(87) Internationale Veröffentlichungsnummer: WO 2008/022621

(56) Entgegenhaltungen:
- WO-A-2005/121573
- DE-A1- 2 945 234
- DE-A1- 3 417 708
- DE-U- 1 684 049
- DE-U1- 8 715 744
- JP-A- 10 073 162
- JP-A- 2000 337 399
- JP-U- S6 245 425
- US-A- 2 271 293
- US-A- 2 798 507
- US-A- 3 322 445
- US-A- 3 901 518
- US-A- 4 121 844

## Beschreibung

Die Erfindung betrifft einen Dichtungsbalg ausgebildet als Mehrfaltenbalg zur Abdichtung eines Kugelgelenks mit einem Gehäuse und einem relativ hierzu bewegbaren Kugelzapfen.

In DE 1 575 684 ist ein Dichtungsbalg für ein Kugelgelenk eines Kraftfahrzeuges beschrieben, der zur Abdichtung zweier relativ zueinander bewegbarer Bauteile (Gehäuse und Kugelzapfen)dient. Der Kugelzapfen ist schwenkbar und drehbar in dem Gehäuse des Kugelgelenkes gelagert. Der zur Abdichtung dieser relativ zueinander bewegbaren Bauteile zum Einsatz kommende Dichtungsbalg weist zwei zueinander beabstandete Randbereichen auf, in die jeweils ein Spannelement eingebettet ist. Die Einbettung des Spannelementes kann hierbei vollständig oder nur teilweise erfolgen. Ein erster der am Dichtungsbalg vorhandenen Randbereiche liegt dichtend an dem Kugelzapfen an, während der gegenüber liegende zweite Randbereich des Dichtungsbalges mit dem Gehäuse des Kugelgelenkes verbunden ist. Zwischen den Randbereichen des Dichtungsbalges befindet sich ein Mantel.

Bei einer derartigen Lösung kann eine Einschränkung der Bewegungsfreiheit des Kugelzapfens gegeben sein. Die Gestaltung der Mantelfläche und der in diesem Bereich ausgebildeten Falte gibt den Betrag des Ausschlagwinkels vor, um den der Kugelzapfen relativ zum Gehäuse verschwenkbar ist. Ist diese Falte zu klein ausgebildet, so kann es bei grenzwertigen Ausschlägen des Kugelzapfens zu einem Abheben eines der Randbereiche des Dichtungsbalges von dem abzudichtenden Bauteil kommen. Dies würde jedoch eine Reduzierung oder Aufhebung der Dichtungsfunktion bedeuten und ist daher zu vermeiden. Anderenfalls ist der verfügbare Ausschlagwinkel des Kugelzapfens begrenzt. Zudem erfordert eine derartige Ausführung in Abhängigkeit von der Größe der Falte des Mantels relativ viel Bauraum.

Um größere Ausschlagwinkel realisieren zu können, ist es bekannt, Bälge mit mehreren in Richtung ihrer axialen Erstreckung aufeinander folgenden Falten im Bereich ihres Mantels auszustatten. Mit derartigen "Mehrfaltenbälgen" sind größere Ausschlagwinkel und damit insgesamt größere Bewegungsfreiheiten der relativ zueinander bewegbaren Bauteile umsetzbar. Aus der WO 2005/121573 A2 geht ein Kugelgelenk hervor, bei dem der Dichtungsbalg in Richtung seiner axialen Erstreckung mehrere Falten im Bereich seines Mantels aufweist. Der Mantel stellt auch bei dieser Ausführung eine Verbindung zwischen zwei am Dichtungsbalg ausgebildeten Randbereichen dar. Bei dieser bekannten Lösung werden die Randbereiche jedoch mittels je eines Spannringes, der von außen auf den Randbereich aufgesetzt werden muss, an dem jeweiligen Bauteil fixiert. Diese zumeist sehr einfachen, federelastische Eigenschaften aufweisenden Spannringe haben den Nachteil, dass ihre Montage sehr aufwändig ist. Zudem weisen sie häufig scharfkantige Enden auf, so dass die Gefahr von Beschädigungen des Dichtungsbalges besteht. Spannringbefestigungen, wie sie in der WO 2005/121573 A2 beschrieben sind, können auch für die zuvor beschriebenen Dichtungsbälge zum Einsatz kommen, weisen jedoch auch hier die genannten Nachteile auf.

Aus US 3 901 518 A und US 2 271 293 A sind Dichtungsbälge für Kugelgelenke bekannt. Diese Bälge haben eine Falte und haben daher Einschränkungen der Bewegungsfreiheit des Kugelzapfens ähnlich wie bei DE 1 575 684.

Aus JP S62-45425 U ist eine Achsmanschette ausgebildet als Mehrfaltenbalg bekannt. Diese Manschette wird an ihren Randbereichen mit den relativ zueinander beweglichen, aber im Gleichlauf befindlichen Bauteilen mittels je eines Spannelements fixiert und bildet somit an den Randbereichen eine statische Dichtung.

Der Erfindung liegt die Aufgabe zugrunde, einen Dichtungsbalg bereitzustellen, der eine größtmögliche Bewegungsfreiheit eines Kugelzapfens bezüglich eines Gehäuses gewährleistet, der zudem einfach aufgebaut und kostengünstig herstellbar ist.

Hierzu wird nach der Erfindung ein Dichtungsbalg der gattungsgemäßen Art bereitgestellt, welcher die Merkmale des Anspruchs 1 aufweist. Weitere Ausgestaltungen sind in den sich anschließenden Unteransprüchen wiedergegeben

Ein Dichtungsbalg zur Abdichtung eines Kugelgelenks mit zwei zueinander beabstandeten und durch einen Mantel verbundenen Randbereichen, in die je ein Spannelement eingebettet ist, ist so ausgelegt, dass der Mantel mehrere, sich in ihrem Betrag unterscheidende Innendurchmesser aufweist und der Innendurchmesser einer der Randbereiche des Dichtungsbalgs größer als der größte der Innendurchmesser des Mantels des Dichtungsbalgs ist.

Hierdurch erhält man einen Dichtungsbalgs, der ein hohes Maß an Beweglichkeit der relativ zueinander bewegbaren Bauteile, deren Abdichtung der Dichtungsbalg dient, ermöglicht. Durch die in die Randbereiche durch Vulkanisation eingebetteten Spannelemente entfällt der bislang erforderliche, sehr aufwändige Montagevorgang für die Befestigung der Spannringe an den Randbereichen. Zudem kann damit die Gefahr von Beschädigungen des Dichtungsbalgs vermieden werden.

Bei Dichtungsbälgen mit eingebetteten Spannelementen in den Randbereichen war es bisher notwendig, die geometrische Auslegung so zu gestalten, dass eine Entformung aus dem zur Herstellung erforderlichen Vulkanisations- oder Spritzgusswerkzeug ohne weiteres möglich ist. Hierzu weisen die Dichtungsbälge bisher eine kreiszylindrische oder eine konische Kontur wie bei US 3 901 518 A auf. Erst bei der Montage dieser Dichtungsbälge wird die für die Bewegungsfreiheit der relativ zueinander bewegbaren Bauteile erforderliche Falte oder Auswölbung durch eine entsprechende Stauchung des Mantels ausgebildet. Diese Vorgehensweise weist jedoch den Nachteil auf, dass die Ausbildung der Falte nicht kontrollierbar ist. Je nach gegebener Materialkonstellation und Wandstärke des Mantels bildet sich die Auswölbung des Dichtungs- oder Faltenbalges an beliebiger Stelle seines Mantels aus.

Indem der Innendurchmesser einer der Randbereiche des Dichtungs- oder Faltenbalges größer als der größte der vorhandenen Innendurchmesser des Mantels des Dichtungsbalges ist, lässt sich auch ein als Mehrfaltenbalg herstellbarer Dichtungsbalg ohne Schwierigkeiten aus dem Vulkanisations- oder Spritzgusswerkzeug entfernen und der in dem Dichtungsbalg vorhandene Kern kann entnommen werden, ohne zu Beschädigungen am Bauteil zu führen. Die Ausbildung der Innenformgebung des Dichtungsbalgs nach Anspruch 1 gestattet damit eine einfache und unkomplizierte Entformung aus dem Vulkanisations- oder Spritzgusswerkzeug. Folglich ist auch die Herstellbarkeit eines Dichtungsbalgs in entscheidendem Maße vereinfacht und damit verbessert worden.

Wenn der Mantel des Dichtungsbalges zumindest einen Innendurchmesser aufweist, der kleiner ist als die in axialer Erstreckung des Dichtungsbalges betrachtet, zu diesem benachbarten Innendurchmesser des Mantels, erhält man zumindest eine im Bereich des Mantels des Dichtungsbalges ausgebildete Einbauchung zwischen zwei Falten, welche eine große Bewegungsfreiheit der durch den Dichtungsbalg abgedichteten und relativ zueinander bewegbaren Bauteile gestattet. Da der erfingdungsgemäß gestaltete Dichtungsbalg der Bewegung der relativ zueinander bewegbaren Bauteile nur einen äußerst geringen Widerstand entgegensetzt, sind diese Bauteile leicht bewegbar.

Zur Erleichterung der Montage des Dichtungsbalges nach Anspruch 1, auf den relativ zueinander bewegbaren Bauteilen ist es von Vorteil, wenn die Spannelemente eine Elastizität aufweisen. Aus diesem Grund wird vorgeschlagen, dass die Spannelemente Federringe sind. Diese elastische Eigenschaften aufweisenden Federringe, die in die Randbereiche des Dichtungsbalges durch Vulkanisation eingebettet werden, lassen sich über die betreffenden, mit dem Dichtungsbalg ausgestatteten Bauteile ziehen und legen sich ohne Weiteres dichtend an die jeweilige Oberfläche an.

Wenn zumindest eines der in den Randbereichen des Dichtungsbalges eingebetteten Spannelemente krallenartig ausgebildet ist und nach der Montage des Dichtungsbalges kraft- und/oder formschlüssig mit der Oberfläche des korrespondierenden Bauteiles in Eingriff gebracht ist, kann sich durch die krallenartige Ausbildung des betroffenen Spannelementes dieses beispielsweise in die Oberfläche des korrespondierenden Bauteiles eingraben. Dieser einmalig während der Montage des Dichtungsbalges erfolgende Prozess gewährleistet eine sichere Fixierung des Randbereiches oder der Randbereiche des Dichtungsbalges an den korrespondierenden, relativ zueinander bewegbaren Bauteilen. Selbstverständlich können auch beide Randbereiche des Dichtungsbalges derartige krallenartig ausgebildete Spannelemente aufweisen. Zur Sicherung der Randbereiche des Dichtungsbalges gegen eine unerwünschte Bewegung in axialer Richtung ist ein solches krallenartig ausgebildetes Spannelement vorgesehen.

Die durch die Bewegung der relativ zueinander bewegbaren Bauteile auch auf den Dichtungsbalg übertragene Materialspannung kann im Laufe der Lebensdauer eines derartigen Bauteiles dazu führen, dass zumindest einer der Randbereiche des Dichtungsbalges entlang einer der Bauteile verschoben wird. Eine derartige Verschiebung birgt jedoch das Risiko von Beschädigungen und damit Undichtheiten. Um dies zu vermeiden, geht eine Weiterbildung der Erfindung dahin, dass zumindest ein Teil wenigstens eines der Spannelemente auf der radial inneren Seite des Randbereiches des Dichtungsbalges aus diesem Randbereich herausragt. Durch den herausragenden Teil des Spannelementes kann eine Fixierung des Randbereiches des Dichtungsbalges an dem Bauteil verbessert werden. Somit ist eine unerwünschte Bewegung des Dichtungsbalges vermeidbar.

Entsprechend einer Ausgestaltung der Erfindung wird ferner vorgeschlagen, dass der größte Innendurchmesser einer der Randbereiche des Dichtungsbalges dem Innendurchmesser eines der Spannelemente entspricht. Damit weisen sowohl der betroffene Randbereich als auch das in dem Randbereich eingebettete Spannelement den gleichen Innendurchmesser auf. Unter dem Innendurchmesser des Spannelementes ist dabei der radial am weitesten innen liegende Abschnitt dieses Spannelementes zu verstehen.

Wie eingangs bereits ausgeführt wurde, stellt es bei den bisher bekannten Dichtungsbälgen mit beidseitig in ihren Randbereichen eingebetteten Spannelementen einen Nachteil dar, dass die Ausbildung der Falte beziehungsweise Auswölbung des Mantels erst durch die Montage des Dichtungsbalges erfolgt und es hierbei an einer definierten Ausbildung der Falte fehlt. Aus diesem Grund wird vorgeschlagen, dass der Mantel des Dichtungsbalges, bezogen auf seine axiale Erstreckung einander abwechselnde Abschnitte mit verstärkten und reduzierten Querschnitten aufweist. Dabei besteht der wesentliche Vorteil darin, dass die Abschnitte mit verstärkten Querschnitten eine größere Stabilität aufweisen als die Abschnitte mit reduzierten Querschnitten. Folglich lässt sich bei einem derartig ausgestatteten Dichtungsbalg exakt vorherbestimmen, an welchen Stellen des Mantels sich eine Auswölbung oder Einbauchung ausbilden wird. Diese Auswölbungen oder Einbauchungen entstehen nämlich in den Bereichen, die einen reduzierten Querschnitt aufweisen. Somit verfügen solche Dichtungsbälge auch im montierten Zustand über eine einheitliche Außenkontur. Dies ist insbesondere von Vorteil, weil damit die Auslegung benachbarter Bauteile sehr genau vorgenommen und erheblicher Bauraum eingespart werden kann.

An einem Dichtungsbalg kann der Mantel des Dichtungsbalgs mehrere Falten aufweisen, deren Flanken jeweils einen verstärkten Querschnitt aufweisen.

Eine bevorzugte Ausführungsform der Erfindung wird nachfolgend anhand der beigefügten Zeichnungen näher erläutert.

Es zeigt:
- Figur 1:: einen Axialschnitt durch einen erfindungsgemäßen Dichtungsbalg,
- Figur 2:: ein in einen der Randbereiche des Dichtungsbalges eingebettetes Spannelement in einer Einzelteildarstellung,
- Figur 3:: ein anderes, in einen der Randbereiche des Dichtungsbalges eingebettetes Spannelement,
- Figur 4:: einen Schnitt durch eine Baugruppe mit einem erfindungsgemäßen Dichtungsbalg
- und Figur 5:: zwei Stadien der Herstellung eines Dichtungsbalges nach der vorliegenden Erfindung.

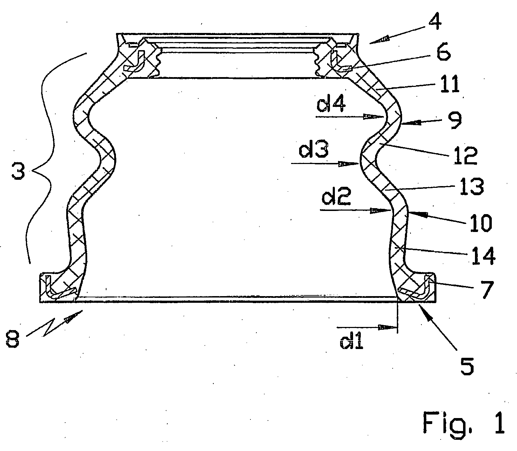

In der Figur 1 ist ein insgesamt mit 8 bezeichneter und im axialen Querschnitt dargestellter Dichtungsbalg gezeigt. Dieser verfügt über zwei beabstandet zueinander angeordnete Randbereiche 4 und 5. Zwischen den Randbereichen 4 und 5 weist der rotationssymmetrische Dichtungsbalg 8 einen Mantel 3 auf. Der Dichtungsbalg 8 hat in seiner axialen Erstreckung betrachtet mehrere aufeinander folgende Durchmesser unterschiedlichen Betrages. Wesentlich ist dabei, dass der Innendurchmesser d1 des Randbereiches 5 größer als der größte der verbleibenden Durchmesser d2, d3 beziehungsweise d4 des Mantels 3 ist. Die Kontur des Mantels 3 bildet im Querschnitt betrachtet eine Wellenform, was für den Dichtungsbalg 8 bedeutet, dass dieser in seiner axialen Erstreckung mehrere aufeinander folgende Falten 9 und 10 aufweist. Dabei wechseln, sich Abschnitte mit einem verstärkten Querschnitt jeweils mit Abschnitten mit einem reduzierten Querschnitt ab. Die Abschnitte mit einem verstärkten Querschnitt bilden jeweils Flanken 11, 12, 13 und 14. Dazwischen finden sich die Bereiche mit einem geringeren Materialquerschnitt. Dies hat zur Folge, dass sich bei dem dargestellten Dichtungsbalg nach seiner Entnahme aus dem Vulkanisations oder Spritzgusswerkzeug die charakteristischen Falten der Mantelfläche 3 ausbilden, ohne dass es hierzu eines gesonderten Einwirkens bedarf. In den Randbereich 4 des Dichtungsbalges 8 ist ein Spannelement 6 einvulkanisiert. Das Vulkanisationsverfahren kommt zur Herstellung eines derartigen Dichtungsbalges zur Anwendung, da dieser insgesamt aus einem elastischen Werkstoff hergestellt wird. Dieser Werkstoff kann insbesondere Gummi sein, welcher sich beispielsweise aus Naturkautschuk erzeugen lässt. Auf der gegenüberliegenden Seite des Randbereiches 4 ist an dem Dichtungsbalg 8 ein Randbereich 5 ausgebildet. Dieser Randbereich 5 nimmt ein Spannelement 7 auf, das ebenfalls während des Vulkanisationsvorgangs, das heißt während der Herstellung des Dichtungsbalges 8 unmittelbar in diesen Randbereich 5 eingebettet wird. Der Innendurchmesser d1 dieses Spannelementes 7 entspricht in diesem Fall dem Innendurchmesser des Randbereiches 5 und stellt den größten der im Bereich der Mantelfläche 3 des Dichtungsbalges 8 vorhandenen Innendurchmesser dar. Durch diese spezielle geometrische Gestaltung lässt sich der im Herstellungswerkzeug des Dichtungsbalges 8 vorhandene Kern 19 problemlos entfernen, ohne dass es am Dichtungsbalgs zu Beschädigungen kommt. Der Randbereich 4 des dargestellten Dichtungsbalges 8 verfügt über die Besonderheit, dass an seiner Innenmantelfläche eine Labyrinthdichtung ausgebildet ist. Diese wellenförmige Labyrinthdichtung verbessert die Anlage an dem abzudichtenden Bauteil.

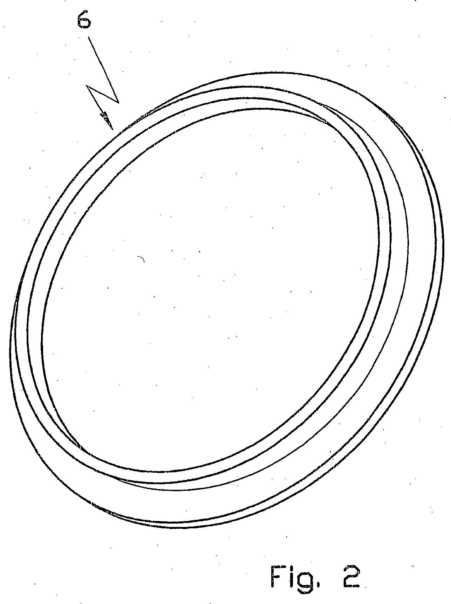

In der Figur 2 ist beispielhaft als Einzelteildarstellung eine perspektivische Ansicht des Spannelementes 6 gezeigt, das in den Randbereich 4 des Dichtungsbalges 8 eingebettet wird. Der annähernd parallel zur axialen Erstreckung des Dichtungsbalges 8 verlaufende Schenkel dieses im Querschnitt L-förmigen Spannelementes 6 weist im montierten Zustand des Dichtungsbalges 8 einen annähernd parallelen Verlauf zu dem durch den Randbereich 4 abgedichteten Bauelement auf.

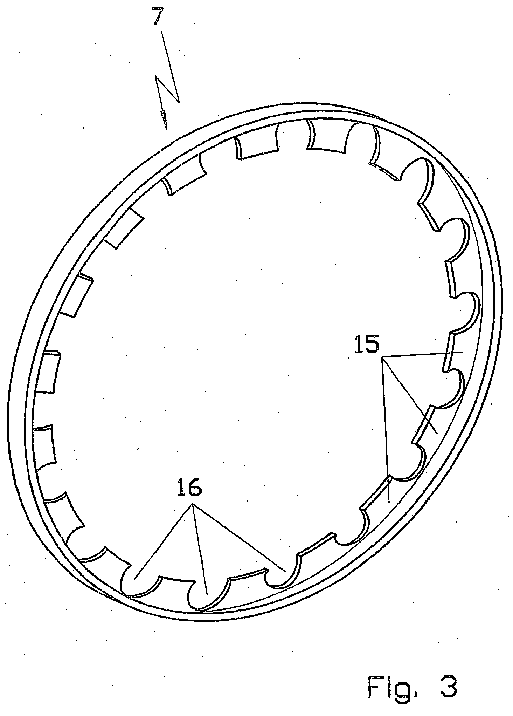

Ein Spannelement für die Einbettung in einen der Randbereiche des Dichtungsbalges ist als Einzelteildarstellung und in perspektivischer Ansicht in der Figur 3 gezeigt. Die Besonderheit dieses Spannelementes 7, welches in den Randbereich 5 des Dichtungsbalges 8 eingebettet wird, besteht darin, dass dieses über seinen Umfang verteilt auf der radial innen liegenden Seite des Dichtungsbalges 8 zahlreiche Ausnehmungen 16 aufweist. Zwischen den Ausnehmungen 16 sind Zähne 15 ausgebildet. Diese Zähne 15 sorgen für eine sichere Fixierung des Randbereiches 5 an dem korrespondierenden Bauteil. Somit ist der Randbereich 5 des Dichtungsbalges 8 auf diese Weise gegen ein axiales Auswandern gesichert. Wie aus der Darstellung der Figur 3 und ebenso aus der Schnittdarstellung der Figur 1 hervorgeht, weisen die Zähne 15 eine winkelige Ausrichtung zur Axiallängsrichtung des Dichtungsbalges 8 auf. Durch diesen Anstellwinkel wird die Fixierung des Randbereiches 5 an dem abzudichtenden Bauteil entscheidend verbessert, weil damit eine Erhöhung der Elastizität des Spannelementes 7 erreichbar ist.

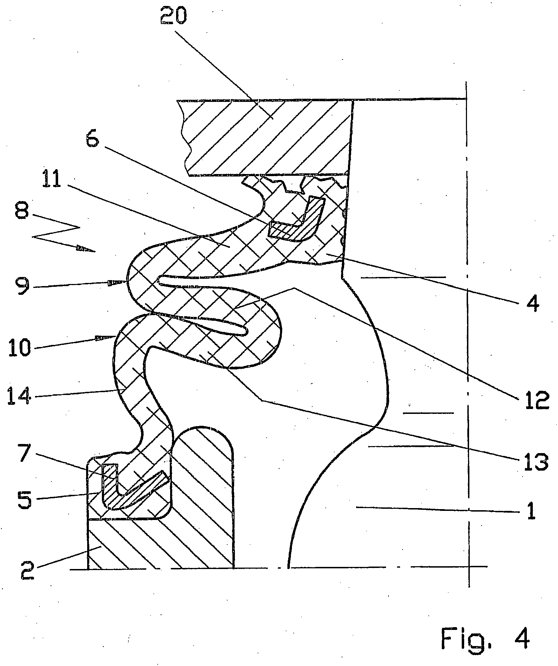

Aus der Figur 4 ist ein Schnitt durch ein Kugelgelenk entnehmbar, die einen erfindungsgemäßen Dichtungsbalg 8 aufweist, Mit 1 ist ein Kugelzapfen eines Kugelgelenkes bezeichnet, dessen Gelenkkugel innerhalb eines Gehäuses 2 drehbeweglich und schwenkbar gelagert ist. Zwischen dem Zapfenabschnitt des Kugelzapfens 1 und einer hierfür am Gehäuse 2 ausgebildeten Anlagefläche ist der Dichtungsbalg 8 angeordnet. Er liegt dabei einerseits mit seinem Randbereich 4 und dem darin eingebetteten Spannelement 6 an dem Kugelzapfen 1 an. Der gegenüberliegende Randbereich 5 mit dem darin eingebetteten Spannelement 7 liegt am Gehäuse 2 an. Das Spannelement 7 stützt sich dabei in elastischer Weise mit einer seiner Flanken gegen die Anlagefläche des Gehäuses 2 ab. Zwischen den Randbereichen 4 und 5 verläuft der Mantel 3 des Dichtungsbalges 8. Dieser weist aufeinander folgend mehrere Flanken 11, 12, 13 und 14 auf, die gemeinsam zwei in axialer Erstreckung des Dichtungs- oder Faltenbalges betrachtet aufeinander folgende Falten 9 und 10 bilden. Die in der Figur 4 gezeigte Baugruppe ist in einem nicht ausgelenkten Zustand des Kugelzapfens dargestellt. In diesem Zustand sind die Falten eng aneinander liegend angeordnet. Die Labyrinthdichtung des Randbereiches 4 des Dichtungsbalges 8 ist bei dem hier gezeigten Ausführungsbeispiel an zwei Seiten des Radbereiches 4 ausgebildet und stützt sich, wie bereits erwährt, einerseits an dem Kugelzapfen 1 ab und andererseits an einem Befestigungsbauteil 20 des Kraftfahrzeuges.

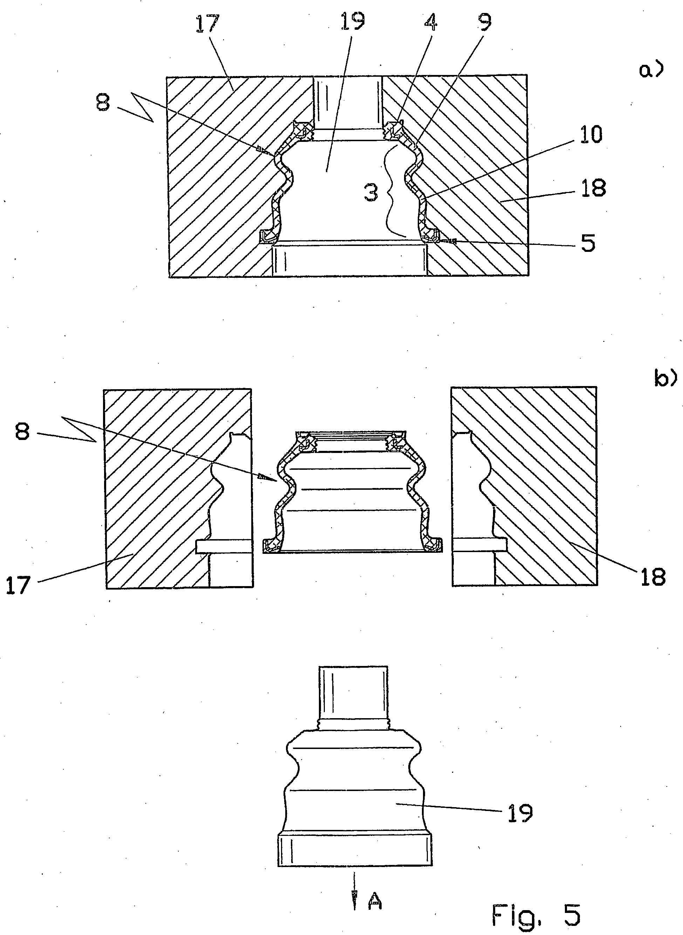

In der Figur 5 ist anhand eines vereinfachten Schemas die Herstellung eines Dichtungsbalges nach der vorliegenden Erfindung veranschaulicht. So zeigt der Bildteil "a" der Figur 5 ein geschlossenes Vulkanisations- oder Spritzgusswerkzeug. Dieses besteht aus einer ersten Werkzeughälfte 17 und einer zweiten Werkzeughälfte 18. Die Teilung des Werkzeugs verläuft entlang der axialen Längsmittenachse des Dichtungsbalges 8. In den innerhalb der Werkzeughälften 17 und 18 ausgebildeten Hohlraum ist ein Kern 19 eingesetzt, so dass zwischen dem Kern 19 und den Innenoberflächen der Werkzeughälften 17 und 18 ein dem Dichtungsbalg 8 entsprechender Hohlraum verbleibt. In diesen Hohlraum wird verflüssigtes Elastomer, vorzugsweise Gummi, eingespritzt. Um während dieses Vulkanisationsvorganges die Spannelemente 6 und 7 in die Randbereiche 4 und 5 des Dichtungsbalges 8 einzubetten, werden diese vor Beginn des Vulkanisationsvorganges an entsprechenden Positionen in das Vulkanisations- oder Spritzgusswerkzeug eingesetzt. Der Dichtungsbalg 8 erhält so während des Vulkanisationsvorganges bereits eine Formgebung, die seiner endgültigen Gestaltung entspricht. Zum Herausnehmen des fertig gestellten und erkalteten Dichtungsbalges 8 aus der Form werden die Werkzeughälften 17 und 18 senkrecht zur axialen Längsmittenachse des Dichtungsbalges 8 auseinander bewegt. Dieser Prozessstatus ist im Bildteil "b" der Figur 5 schematisch vereinfacht gezeigt. Neben der Trennung der Werkzeughälften 17 und 18 voreinander wird auch der Kern 19 aus dem Innenraum des Dichtungsbalges 8 entfernt. Die Entfernung des Kernes 19 erfolgt in Richtung des Pfeiles A in Figur 5b. Diese Richtung entspricht der Richtung der axialen Längsmittenachse des Dichtungsbalges 8. Die Entfernung des Kernes 19 ist auch ohne weitere Schwierigkeiten möglich, da der Innendurchmesser d1 des Randbereiches 5 sowie des darin eingebetteten Spannelementes 7 größer als die übrigen Durchmesser d2 bis d4 des Mantels 3 des Dichtungsbalges 8 ist.

### Bezugszeichenliste

- 1.: erstes Bauteil
- 2.: zweites Bauteil
- 3.: Mantel
- 4.: Randbereich
- 5.: Randbereich
- 6.: Spannelement
- 7.: Spannelement
- 8.: Dichtungs- oder Faltenbalg
- 9.: Falte
- 10.: Falte
- 11.: Flanke
- 12.: Flanke
- 13.: Flanke
- 14.: Flanke
- 15.: Zähne
- 16.: Ausnehmungen
- 17.: erste Werkzeughälfte
- 18.: zweite Werkzeughälfte
- 19.: Kern
- 20.: Befestigungsbauteil des Kraftfahrzeuges
- d1-d4: Innendurchmesser

## Patentansprüche

1. Dichtungsbalg , ausgebildet als Mehrfaltenbalg zur Abdichtung eines Kugelgelenks mit einem Gehäuse (2) und einem relativ hierzu bewegbaren Kugelzapfen (1), mit zwei zueinander beabstandeten und durch einen Mantel (3) verbundenen Randbereichen (4, 5), in die je ein Spannelement (6, 7) durch Vulkanisation eingebettet ist, bei dem der Mantel (3) sich in ihrem Betrag unterscheidende Innendurchmesser (d1) am Randbereich (5) und an radialen Ausbuchtungen und Einbuchtungen (d2, d3, d4) aufweist und einer der Randbereiche (4, 5) einen Innendurchmesser (d1) besitzt, der größer als der größte Innendurchmesser (d2, d3, d4) des Mantels (3) des Mehrfaltenbalges (8) an den Einbuchtungen und Ausbuchtungen ist, wobei der Mantel (3) zumindest einen Innendurchmesser (d3) an einer Einbuchtung aufweist, der kleiner ist als die in Axialerstreckung des Mehrfaltenbalgs (8) betrachtet zu diesem benachbarten Innendurchmessern (d2, d4) an den Ausbuchtungen des Mantels (3), und wobei zumindest eines der in den Randbereichen (4, 5) des Mehrfaltenbalgs (8) eingebetteten Spannelement (7) krallenartig ausgebildet ist und nach der Montage des Mehrfaltenbalgs (8) kraft- und/oder formschlüssig mit der Oberfläche des korrespondierenden Gehäuses (2) in Eingriff bringbar ist.

2. Dichtungsbalg, **dadurch gekennzeichnet, dass** die Spannelemente (6, 7) Federringe sind.

3. Dichtungsbalg nach einem der vorangehenden Ansprüche, **dadurch gekennzeichnet, dass** zumindest ein Teil wenigstens eines der Spannelemente (6, 7) auf der radial inneren Seite des Randbereiches (4, 5) des Mehrfaltenbalgs (8) aus diesem Randbereich (4, 5) herausragt.

4. Dichtungsbalg nach einem der vorangehenden Ansprüche, **dadurch gekennzeichnet, dass** der größte Innendurchmesser (d1) dem Innendurchmesser eines der Spannelemente (5) entspricht.

5. Dichtungsbalg nach einem der vorangehenden Ansprüche, **dadurch gekennzeichnet, dass** der Mantel (3) des Mehrfaltenbalgs (8) Falten (9, 10) aufweist, deren Flanken (11, 12, 13, 14) jeweils einen verstärkten Querschnitt aufweisen.

## Claims

1. Sealing boot, configured as a multiple-convolution boot for sealing a ball joint having a housing (2) and a ball pivot (1) which can be moved relative to the former, with two edge regions (4, 5) which are spaced apart from one another, are connected by way of a shell (3) and into which in each case one clamping element (6, 7) is embedded by way of vulcanization, in which sealing boot the shell (3) has internal diameters (d1) of different magnitude at the edge region (5) and at radial bulges and indentations (d2, d3, d4), and one of the edge regions (4, 5) has an internal diameter (d1) which is greater than the greatest internal diameter (d2, d3, d4) of the shell (3) of the multiple-convolution boot (8) at the indentations and bulges, the shell (3) having at least one internal diameter (d3) at an indentation, which internal diameter (d3) is smaller than the internal diameters (d2, d4), adjacent to it as viewed in the axial extent of the multiple-convolution boot (8), at the bulges of the shell (3), and at least one of the clamping elements (7) which are embedded in the edge regions (4, 5) of the multiple-convolution boot (8) being of claw-like configuration and being capable of being brought into non-positive and/or positively locking engagement with the surface of the corresponding housing (2) after the mounting of the multiple-convolution boot (8).

2. Sealing boot, **characterized in that** the clamping elements (6, 7) are spring rings.

3. Sealing boot according to either of the preceding claims, **characterized in that** at least part of at least one of the clamping elements (6, 7) protrudes on the radially inner side of the edge region (4, 5) of the multiple-convolution boot (8) out of the said edge region (4, 5).

4. Sealing boot according to one of the preceding claims, **characterized in that** the greatest internal diameter (d1) corresponds to the internal diameter of one of the clamping elements (5).

5. Sealing boot according to one of the preceding claims, **characterized in that** the shell (3) of the multiple-convolution boot (8) has convolutions (9, 10), the flanks (11, 12, 13, 14) of which in each case have a reinforced cross section.

## Revendications

1. Manchon d'étanchéité réalisé sous forme de soufflet multiple pour l'étanchéité d'une articulation sphérique comprenant un boîtier (2) et un tourillon sphérique (1) déplaçable par rapport à celui-ci, avec deux régions de bord (4, 5) espacées l'une de l'autre et connectées par une enveloppe (3), dans lesquelles est incorporé par vulcanisation un élément de serrage respectif (6, 7), l'enveloppe (3) présentant des diamètres intérieurs (d1) de valeurs différentes au niveau de la région de bord (5) et au niveau de renflements et de renfoncements radiaux (d2, d3, d4) et l'une des régions de bord (4, 5) présentant un diamètre intérieur (d1) qui est supérieur au plus grand diamètre intérieur (d2, d3, d4) de l'enveloppe (3) du soufflet multiple (8) au niveau des renfoncements et des renflements, l'enveloppe (3) présentant au moins un diamètre intérieur (d3) au niveau d'un renfoncement, lequel diamètre intérieur est inférieur aux diamètres intérieurs (d2, d4) au niveau des renflements de l'enveloppe (3), adjacents au soufflet multiple, considéré dans la direction de l'étendue axiale du soufflet multiple (8), et au moins un élément de serrage (7) encastré dans les régions de bord (4, 5) du soufflet multiple (8) étant réalisé en forme de griffe et pouvant être amené en prise avec la surface du boîtier correspondant (2) par engagement par force et/ou par correspondance de formes après le montage du soufflet multiple (8).

2. Manchon d'étanchéité, **caractérisé en ce que** les éléments de serrage (6, 7) sont des bagues élastiques.

3. Manchon d'étanchéité selon l'une quelconque des revendications précédentes, **caractérisé en ce qu'**au moins une partie d'au moins l'un des éléments de serrage (6, 7) fait saillie du côté radialement interne de la région de bord (4, 5) du soufflet multiple (8) hors de cette région de bord (4, 5).

4. Manchon d'étanchéité selon l'une quelconque des revendications précédentes, **caractérisé en ce que** le plus grand diamètre intérieur (d1) correspond au diamètre intérieur de l'un des éléments de serrage (5).

5. Manchon d'étanchéité selon l'une quelconque des revendications précédentes, **caractérisé en ce que** l'enveloppe (3) du soufflet multiple (8) présente des plis (9, 10) dont les flancs (11, 12, 13, 14) présentent à chaque fois une section transversale renforcée.
